# EUROPÄISCHE PATENTSCHRIFT

(11) **EP 0 842 081 B1**
(45) Veröffentlichungstag und Bekanntmachung des Hinweises auf die Patenterteilung: **22.03.2000**
(21) Anmeldenummer: 96927030.5
(22) Anmeldetag: 17.07.1996
(51) Int. Cl.: B62D 17/00, B60G 7/02

(54) **LAGEVERÄNDERLICHE STIRNSEITIGE EINSPANNUNG EINES RINGKÖRPERS**
VARIABLE-POSITION FRONTAL CLAMPSING SYSTEM FOR AN ANNULAR COMPONENT
DISPOSITIF DE FIXATION FRONTALE, A POSITIONNEMENT VARIABLE, D'UN CORPS ANNULAIRE

(30) Priorität: 04.08.1995 DE 19528790
(43) Veröffentlichungstag der Anmeldung: 20.05.1998
(73) Patentinhaber: DaimlerChrysler AG, 70567 Stuttgart (DE)
(72) Erfinder: REICHELT, Helmut, D-73770 Denkendorf (DE); JEGLITZKA, Maximilian, D-70376 Stuttgart (DE)
(86) Internationale Anmeldenummer: EP9603139
(87) Internationale Veröffentlichungsnummer: WO9706047

(56) Entgegenhaltungen:
- DE-C- 4 206 415
- DE-C- 4 327 021

## Beschreibung

Die Erfindung betrifft eine lageveränderliche stirnseitige Einspannung eines Ringkörpers, insbesondere bei einem Lager für Radlenker von Kraftfahrzeugen nach dem Oberbegriff des Patentanspruchs 1.

Lageveränderliche Anlenkungen der vorgenannten Art sind beispielsweise bei der Anlenkung von Radlenkern für Kraftfahrzeuge üblich, um ausgehend von einer bei der Serienmontage angestrebten Mittellage nach beiden Seiten abweichende exzentrische Lagen fixieren zu können. Angestrebt wird dies unter anderem, um nach leichteren Karambolagen, wie einer heftigen Bordsteinberührung eingetretene Veränderungen in Sturz und Nachlauf soweit korrigieren zu können, daß das im Rahmen der Serienfertigung und für ein sicheres Betriebsverhalten erlaubte Toleranzfeld für Nachlauf und Sturz wieder eingehalten wird. Ansonsten würden solche Korrekturen Eingriffe in die Karosserie, beispielsweise durch Nachrichten derselben bedingen, was nach größeren Unfällen auch erforderlich ist, was aber bei solchen kleineren Karambolagen einen unvertretbaren Aufwand bedeuten würde.

Bei einer nach DE 4327021 C1 bekannten Ausführung werden die Nachstellmöglichkeiten unter anderem durch eine speziell profilierte Form der Öffnungen der Lagerschenkel zusammen mit angepaßt profilierten Unterlegscheiben und unter Einsatz von Schraub-Bolzen mit eingearbeiteten profilierten Ausnehmungen erreicht. Ein speziell profilierter Schraub-Bolzen ist nur für eine aus der Mitte versetzte Lage notwendig. Für eine zentrische Lage des Schraub-Bolzens kann dagegen ein üblicher Schraub-Bolzen mit zylindrischem Schaft und umfangsmäßig nicht unterbrochenem Gewinde in beispielsweise einer genormten Ausführung eingesetzt werden. Diese Profilierung der Öffnungen in den Lagerschenkeln besteht darin, daß bei einer Langlochgrundform an den gegenüberliegenden kurzen Seiten jeweils ein in die Öffnung ragender Führungssteg vorgesehen ist, so daß jede der Lagerschenkelöffnungen ein Paar gegenüberliegender Führungsstege besitzt. Durch diese Führungsstege ist ein umfangsmäßig geschlossener Schraub-Bolzen zentrisch einführbar. Soll ein Schraub-Bolzen dagegen exzentrisch in der Öffnung eines Lagerschenkels liegen, ist ein speziell mit einer Führungsnut ausgestatteter Schraub-Bolzen zu verwenden. Indem der Schraub-Bolzen mit dieser einen Führungsnut den Führungssteg der Langlochbohrung des Lagerschenkels übergreift, liegt er exzentrisch innerhalb dieser Öffnung. Um bei der Montage in dieser Lage gehalten zu werden, ist eine Ringscheibe zu verwenden, die so in die Öffnung des Lagerschenkels einsetzbar ist, daß der Schraub-Bolzen nicht aus seiner exzentrischen Lage verrutschen kann. Die Ringscheibe muß daher mit einem in die Öffnung eingreifenden Nocken versehen sein.

Aus DE 42 06 415 C1 ist ferner eine gattungsgemäße Einspannung bekannt, bei der der Schraub-Bolzen auf seinem Umfang zumindest teilweise gezahnt ist und in den Lagerschenkeln in jeweils ein Langloch mit einem gleichartig gezahnten Rand quer zur Ringkörperachse verschiebbar ist. Bei dieser Ausführung ist insbesondere keine Soll-Lage des Schraub-Bolzens innerhalb der Lagerschenkel-Öffnungen vorgebbar. Diese Soll-Lage muß vielmehr jeweils eingestellt werden, da der Schraub-Bolzen grundsätzlich von einer Mittellage innerhalb des Langloches abweichende Lagen einnehmen kann. Dies ist in der Praxis teilweise unerwünscht.

Hiervon ausgehend beschäftigt sich die Erfindung in erster Linie mit dem Problem, die gattungsgemäße lageveränderliche Einspannung derart weiterzubilden, daß die Lagefixierung des Bolzens ohne zusätzliche Hilfsmittel erreicht wird. So soll zum einen bei einem exzentrischen Einbau des Bolzens keine zusätzliche Einlegescheibe notwendig sein. Des weiteren soll insbesondere eine lageveränderliche Einspannung in kreisrunden Öffnungen der Lagerschenkel möglich sein. Ferner sollen bei einer zentrischen Montage der Bolzen keine Schraub-Bolzen mit ungenormten Spezialformen erforderlich sein.

Eine Lösung für den vorgenannten Problemkomplex zeigt eine gattungsgemäße lageveränderliche Einspannung in einer Ausführung nach dem kennzeichnenden Merkmal des Patentanspruchs 1 auf.

Vorteilhafte Ausgestaltungen sind Gegenstand der Unteransprüche.

Bei der erfindungsgemäßen Lösung kann der für eine lageveränderliche Einspannung erforderliche Verschieberaum herstellungsmäßig besonders günstig in die zentrale Öffnung des Ringkörpers verlegt werden, wenn dieser Ringkörper ein verformungsfähiges Teil ist.

Grundsätzlich kann der erfindungsgemäß in der Form eines mit Führungsstegen versehenen Langloches gestaltete Verschieberaum gleichzeitig in dem Ringkörper und in den Lagerschenkeln vorgesehen werden. Dadurch kann der einstellbare Verschiebeweg zwischen Ringkörper und Lagerschenkeln gegenüber einer Ausführung verdoppelt werden, in der nur eines der beiden Teile mit einem Langloch und das andere Teil mit einer kreisrunden Aufnahmeöffnung bzw. - öffnungen versehen ist.

In Fällen, in denen die Lagerschenkel Bestandteil eines schwierig mit engen Toleranzen herstellbaren Gußteiles sind, während der Ringkörper auf relativ einfache Weise mit einer profilierten Innenform hergestellt werden kann, wird der Verschieberaum vorzugsweise lediglich in dem Ringkörper vorgesehen, während die Lagerschenkel kreisrunde, beispielsweise durch Bohren herstellbare, Öffnungen erhalten. Die Erfindung gestattet bereits mit rein zylindrischen Bolzen, das heißt Bolzen die eine geschlossene zylindrische Außenfläche aufweisen, grundsätzlich mehrere gegeneinander versetzte Positionen von Ringkörper und Lagerschenkeln. Hierfür sind lediglich eine entsprechend ausreichende Anzahl an Führungsstegen in den betreffenden Langlochöffnungen erforderlich. Bevorzugt ist allerdings eine Ausführungsform der Langlöcher mit jeweils zwei auf jeder Längsseite eines Langloches angebrachten Führungsstegen, wobei die Langlöcher grundsätzlich sowohl in den Lagerschenkeln und/oder innerhalb des Ringkörpers liegen können. Des weiteren sollen die Führungsstege bevorzugt in einem derartigen Abstand von den Querseiten eines Langloches angebracht sein, daß ein rein zylindrischer Bolzen lediglich zwischen den beiden Führungsstegen einführbar ist. Dadurch ist bei der Verwendung eines rein zylindrischen Bolzens ausschließlich eine Montage in der Mittenlage eines Langloches möglich.

Ist nur entweder in den Lagerschenkeln oder in dem Ringkörper ein Langloch vorhanden und dieses lediglich mit zwei Führungsstegen je Längsseite versehen, während das jeweils andere Teil eine kreisrunde Öffnung bzw. Öffnungen besitzt, lassen sich der Ringkörper und die Lagerschenkel ausschließlich in einer vordefinierbaren Soll-Zuordnungsposition montieren.

Von einer vorgebbaren Soll-Zuordnungsposition abweichende Zuordnungen zwischen Ringkörper und Lagerschenkeln lassen sich erfindungsgemäß in jedem Fall durch speziell geformte Bolzen erreichen. Die Spezialform solcher Bolzen besteht in gegenüberliegenden Längs-Führungsnuten mit einer den Führungsstegen in dem oder den Langlöchern derart angepaßten Zuordnung, daß die Bolzen in einer Art Nut- und Federverbindung auf die Führungsstege in dem bzw. den Langlöchern aufschiebbar sind.

Bei insbesondere Ausführungen mit lediglich zwei Führungsstegen je Längsseite eines Langloches sollten sich die Führungsnuten in einem für einen versetzten Einbau erforderlichen Form-Bolzen nicht diametral gegenüberliegen. Die Führungsnuten sollten vielmehr derart auf dem Umfang verteilt sein, daß sich zwischen ihnen umfangsmäßig zwei unterschiedliche Bogenabschnitte ergeben. Durch entsprechende Formgebung der Langlöcher mit den darin befindlichen Führungsstegen , die einen solchen Form-Bolzen aufnehmen, kann dadurch durch die Umfangslage des Schraub-Bolzens erkannt werden, zu welcher Seite der Bolzen innerhalb des Langloches verschoben ist. Von Interesse ist dies beispielsweise dann, wenn das Langloch innerhalb des Ringkörpers liegt und dadurch die Einsatzlage von außen nicht ohne weiteres erkennbar ist. Nicht erkennbar ist die Einsatzlage insbesondere dann, wenn die Lagerschenkel eine kreisrunde Aufnahmeöffnung besitzen.

Um in dem zuletzt genannten Fall eine versetzte Lage eines Bolzens einfach erkennen zu können, kann die Stirnseite des Bolzens auf derjenigen Umfangsseite, die jeweils an der schmalen Seite eines Langloches zur Anlage kommt, mit einer Pfeilspitze mit einem zum Zentrum des Bolzens verlaufenden Pfeilschaft versehen werden.

Ist die zentrale Öffnung des Ringkörpers das erfindungsgemäß gestaltete Langloch zur Aufnahme eines Verbindungs-Bolzens, so kann dieses Langloch auf einen axialen Mittelbereich innerhalb des Ringkörpes beschränkt sein. Ein Ringkörper mit einer entsprechenden Innenprofilierung kann auf einfache Weise bei einem durch Ur- oder Umformen erzeugten Teil realisiert werden.

Ein Ausführungsbeispiel der Erfindung ist in der Zeichnung dargestellt.

Es zeigen
- Fig. 1: einen Längsschnitt durch einen zwischen zwei Lagerschenkeln eingespannten Ringkörper,
- Fig. 2a - c: jeweils einen Schnitt durch den Ringkörper mit darin liegendem Bolzen nach Linie II-II in Fig. 1 mit jeweils versetzten Lagen des Bolzens innerhalb des als Aufnahme-Öffnung dienenden Langloches des Ringkörpers,
- Fig. 3: eine Ansicht eines als Schraub-Bolzen mit Führungsnuten ausgebildeten Form-Bolzens,
- Fig. 4: einen Schnitt durch den Form-Bolzen nach Linie IV-IV in Fig. 3.

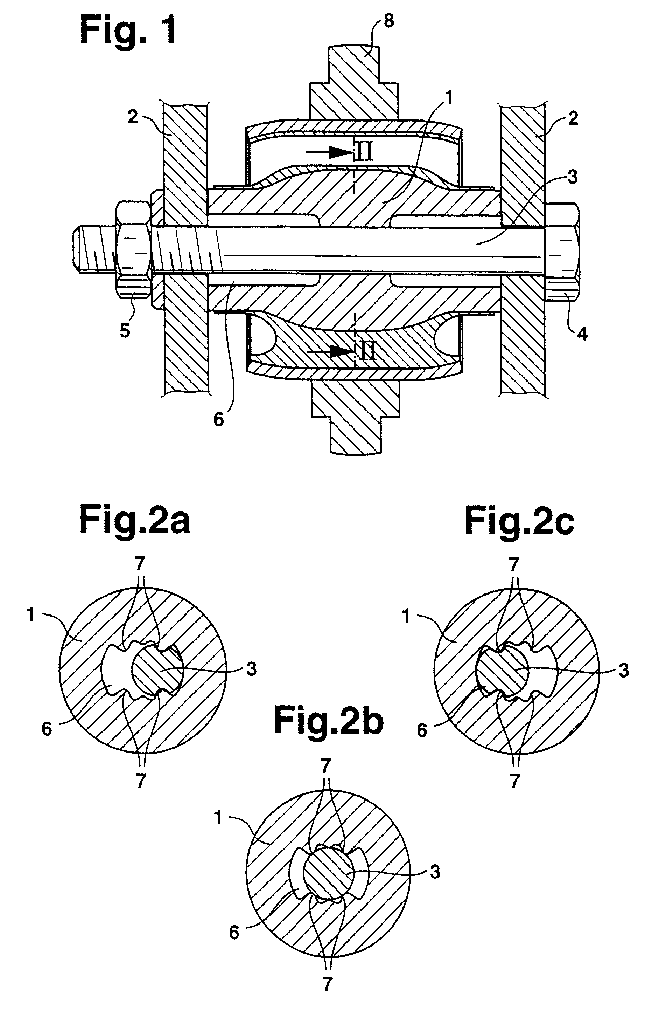

In Fig. 1 ist ein Ringkörper 1 an seinen Stirnseiten zwischen zwei Lager-Schenkeln 2 über einen Schraub-Bolzen 3 verspannt. Der Schraub-Bolzen 3 durchgreift die Lager-Schenkel 2 sowie den Ringkörper 1, wobei er an einem Ende mit einem Schraubkopf 4 an dem einen und an seinem anderen Ende mit einer dort aufgeschraubten Mutter 5 an dem anderen Lager-Schenkel 2 anliegt. Die Öffnungen der Lager-Schenkel 2 zur Aufnahme des Schraub-Bolzens 3 sind kreisrund. Die Lageveränderbarkeit zwischen dem Lager-Schenkel 2 einerseits und dem Ringkörper 1 andererseits ist daher ausschließlich über ein Langloch 6 im Zentrum des Ringkörpers 1 möglich. Dieses Langloch 6 besitzt auf jeder Längsseite jeweils zwei sich auf beiden Längsseiten gegenüberliegende Führungsstege 7 und liegt in dem axialen Mittelbereich des Ringkörpers 1.

Die Anordnung der Führungsstege 7 ist derart, daß ein Schraub-Bolzen 3 in einfacher zylindrischer Ausführung nur zentrisch zwischen den Führungsstegen 7 in den Ringkörper 1 einführbar ist.

Ist der Ringkörper wie 1 wie in Fig. 1 dargestellt das Auge eines Radlenkers 8 eines Kraftfahrzeuges und sind die Aufnahmeöffnungen in den Lager-Schenkeln 2 kreisrund bei einem Langloch 6 innerhalb des Ringkörpers mit lediglich zwei Führungsstegen je Längsseite, läßt sich der Schraub-Bolzen 3 lediglich in einer einzigen zentrischen Soll-Lage einführen, wenn der Raum zwischen den Führungsstegen 7 und den Querseiten des Langloches 6 so eng ausgelegt ist, daß eine Aufnahme des Bolzens 3 dort nicht möglich ist. Eine einzig mögliche zentrische Soll-Lage des Schraub-Bolzens 3 ist in der Praxis bei der Anlenkungsmontage eines Radlenkers 8 erwünscht, da nur dann sichergestellt ist, daß die einzelnen miteinander verbundenen Radlenkerteile in dem vorgegebenen Fertigungstoleranzfeld liegen, so daß Nachlauf und Sturz ebenfalls innerhalb eines vorgegebenen Toleranzfeldes automatisch erreichbbar sind.

Eine ausschließlich zentrische Montage ist unter Verwendung eines rein zylindrischen Bolzens aber auch möglich, wenn die Langlöcher sowohl in dem Ringkörper 1 als auch in den Lager-Schenkeln 2 auf jeder Längsseite mit nur zwei Führungsstegen 7 versehen sind und diese so eng von den Schmalseiten des Langloches beabstandet sind, daß eine Bolzen-Lagerung nur zwischen den beiden Führungsstegen 7 möglich ist.

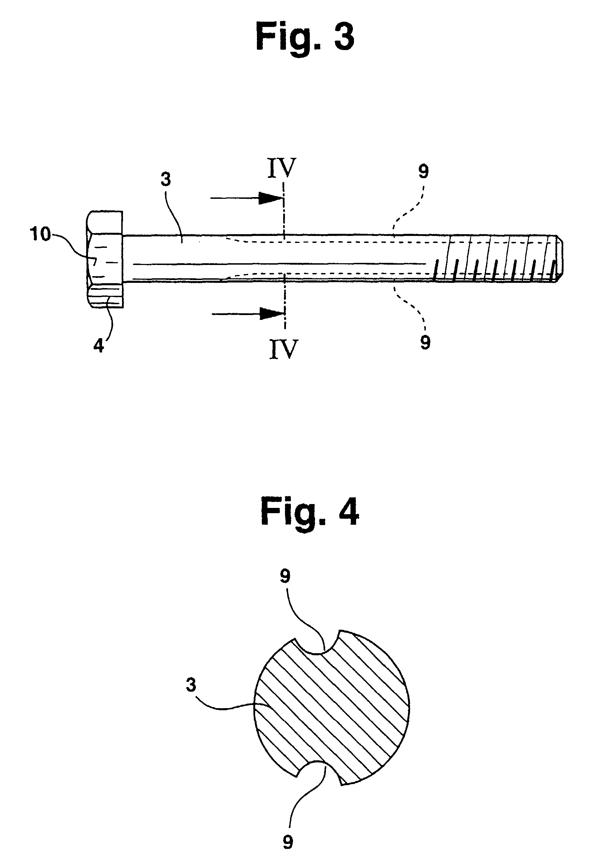

Für eine exzentrische Lage innerhalb eines Langloches 6 ist jeweils ein Form-Bolzen 3 in Spezialausführung nach Fig. 3 mit längs dessen Achse verlaufenden Führungsnuten 9 erforderlich. Dies bedeutet, daß in Reparaturfällen ein bei der Serienmontage zentrisch eingesetzter rein zylindrischer Schraub-Bolzen 3 durch einen speziell geformten Schraub-Bolzen 3 mit Führungsnuten 9 ersetzt werden muß, wenn ein solcher exzentrisch eingesetzt werden soll.

Bei den Schraub-Bolzen 3 liegen die Führungsnuten nicht diagonal gegenüber. Dadurch ist der Schraub-Bolzen 3 jeweils nur in einer bestimmten Verdrehlage innerhalb der Öffnung mit den Führungsstegen 7 des Ringkörpers 1 einsetzbar, wenn die Führungsstege 7 derart angeordnet sind, daß zwischen ihnen und der kurzen Außenseite des Langloches 6 jeweils nur der kurze Bogenabschnitt des Schraub-Bolzens 3 zwischen dessen Führungsnuten 9 zu liegen kommen kann. Ist auf dem Kopf 4 des als Schrauben-Bolzen ausgebildeten Bolzens 3 von außen sichtbar eine Markierung dem kurzen Kreisbogen zwischen den Führungsnuten 9 zugeordnet, so kann bei einem montierten Schraub-Bolzen 3 auf einfache Weise von außen erkannt werden, zu welcher Seite innerhalb der Öffnung des Ringkörpers 1 er versetzt ist. Dies ist in der Praxis für ein Erkennen der exzentrischen Lage von außen nötig. Eine solche Markierung ist in der Form eines auf dem Schraubkopf 4 vorgesehenen Pfeiles oder einer Einkerbung 10 leicht möglich.

Bei dem dargestellten Ausführungsbeispiel sind in dem Langloch 6 des Ringkörpers 1 jeweils lediglich zwei Führungsstege je Längsseite vorhanden, wodurch sich für den Schraub-Bolzen 3 insgesamt drei Einbaulagen ergeben, wenn zwischen den Führungsstegen 7 und der kurzen Seite des Langloches 6 jeweils nur der kurze Bogenabschnitt des Schraub-Bolzens 3 formschlüssig zu liegen kommen kann.

## Patentansprüche

1. Lageveränderliche stirnseitige Einspannung eines Ringkörpers (1), insbesondere bei einem Lager zur Anlenkung eines Radlenkers von Kraftfahrzeugen, zwischen gegenüberliegenden Lager-Schenkeln (2) mittels eines durch in Überdeckung bringbare Öffnungen in den Lager-Schenkeln (2) sowie dem Ringkörper (1) axial einführbaren Bolzens (3) mit an diesem endseitig vorsehbaren Anschlägen (4, 5) zum Verspannen der Schenkel gegenüber dem Ringkörper,
**gekennzeichnet durch die Merkmale**
- die Öffnungen in dem Ringkörper (1) und/oder den Lager-Schenkeln (2) sind Langlöcher (6), wobei die Langlöcher (6) in den Lager-Schenkeln (2) an sich bekannt sind,
- an den in Längsrichtung eines jeweiligen Langloches (6) verlaufenden Längsseiten sind jeweils mindestens zwei axial verlaufende, sich gegenüberliegende Führungsstege (7) vorgesehen,
- die sich gegenüberliegenden Führungsstege (7) weisen untereinander und gegenüber den Querseiten eines jeweiligen Langloches (6) Abstände auf, die zumindest eine lagemäßig definierte Aufnahme eines Bolzens (3) mit zylindrisch geschlossener Außenform sowie mindestens zwei hiervon abweichende Lagen durch Einsetzen eines Form-Bolzens (3) mit den Führungsstegen (7) angepaßten Führungsnuten erlauben.

2. Lageveränderliche Einspannung eines Ringkörpers nach Anspruch 1,
**dadurch gekennzeichnet**,
daß auf jeder Längsseite eines Langloches (6) lediglich zwei Führungsstege (7) vorgesehen sind.

3. Lageveränderliche stirnseitige Einspannung nach Anspruch 1 oder 2,
**dadurch gekennzeichnet**,
daß die in Längsrichtung eines Langloches (6) außen liegenden Führungsstege (7) einen Abstand von der jeweils angrenzenden Querseite des Langloches (6) besitzen, durch den dort ein mit den betreffenden Führungsstegen (7) angepaßten Führungsnuten (9) versehener Bolzen lediglich mit nicht diagonal gegenüberliegend angeordneten Führungsnuten (9) mit seinem zwischen dessen beiden Führungsnuten (9) liegenden geringeren Umfangsbereich in das Langloch (6) einschiebbar ist.

4. Lageveränderliche Einspannung eines Ringkörpers nach einem der vorhergehenden Ansprüche,
**dadurch gekennzeichnet**,
daß die Führungsstege (7) auf einen axialen Mittelbereich des Ringkörpers (1) begrenzt sind.

## Claims

1. A positionally adjustable, face-mounted fixing device in an annular body (1), in particular in a bearing used to locate steering arms on motor vehicles, between opposing bearing legs (2) by means of a bolt (3) which can be introduced axially into holes in the bearing legs (2) and the annular body (1) which can be positioned one over the other with stops (4, 5) which can be provided at the end of the bolt (3) to fix the leg against the annular body,
**characterised in that**
- the openings in the annular body (1) and/or the bearing legs (2) are slots (6), whereby the slots (6) in the bearing legs (2) are known in their own right,
- at least two axially running guide notches (7) positioned opposite each other are provided on the sides of the slots (6),
- that there are gaps between the opposing guide notches and between the guide notches and the ends of each slot which can take a bolt with a cylindrically closed outer shape in at least one defined position and a formed bolt with guide grooves adapted to the guide notches in at least another two positions.

2. A positionally adjustable fixing device in an annular body in accordance with Claim 1,
**characterised in that**
only two guide notches (7) are provided on each side of a slot (6).

3. A positionally adjustable, face-mounted fixing device in accordance with Claim 1 or 2,
**characterised in that**
there is a space between the guide notches (7) lying along the outer side of a slot (6) and the adjoining end of the slot (6) through which the small peripheral section of a bolt between two guide grooves (9) which are positioned in such a manner that they are not diagonally opposite each other and which are adapted to the guide notches (7) in question can be pushed into the slot (6).

4. Apositionally adjustable fixing device of an annular body in accordance with one of the preceding claims,
**characterised in that**
the guide notches (7) are limited to an axial central section of the annular body (1).

## Revendications

1. Dispositif de fixation frontale, variable en position, d'un corps annulaire (1), en particulier dans le cas d'un support pour l'articulation d'un bras oscillant de véhicules à moteur, entre des branches (2), situées en face l'une de l'autre, du support au moyen d'une tige (3) qui peut s'insérer axialement par des ouvertures, que l'on peut amener en coïncidence, dans les branches (2) du support ainsi que dans le corps annulaire (1) et présente des butées (4, 5), qui peuvent être prévues en extrémité sur cette tige pour fixer les branches par rapport au corps annulaire,
caractérisé par les caractéristiques suivantes
◆ les ouvertures dans le corps annulaire (1) et/ou dans les branches (2) du support sont des lumières (6), les lumières (6) dans les branches (2) du support étant connues en soi,
◆ sur chacun des côtés longitudinaux, orientés selon la direction longitudinale, d'une lumière respective (6), sont prévues au moins deux nervures de guidage (7) orientées axialement et situées l'une en face de l'autre,
◆ les nervures de guidage (7) situées l'une en face de l'autre présentent, l'une par rapport à l'autre et par rapport aux côtés transversaux d'une lumière respective (6), des distances qui permettent au moins la réception, définie en position, d'une tige (3) présentant une forme extérieure cylindrique fermée ainsi qu'au moins deux positions qui s'en écartent par utilisation d'une tige de forme (3) présentant des rainures de guidage adaptées aux nervures de guidage (7).

2. Dispositif de fixation, variable en position, d'un corps annulaire selon la revendication 1, caractérisé par le fait que sur chaque côté longitudinal, d'une lumière (6) ne sont prévues que deux nervures de guidage (7).

3. Dispositif de fixation frontale variable en position selon la revendication 1 ou 2, caractérisé par le fait que les nervures de guidage (7) débordant selon la direction longitudinale d'une lumière (6) se trouvent à une distance du côté transversal, dont elles sont proches, de la lumière (6) grâce à laquelle ne peut s'enfiler dans la lumière (6), par sa plus petite zone périphérique située entre ses deux rainures de guidage (9), qu'une tige présentant les rainures de guidage (9) adaptées aux nervures de guidage en question (7), les rainures de guidage (9) n'étant pas disposées diagonalement l'une en face de l'autre.

4. Dispositif de fixation variable en position d'un corps annulaire selon l'une des revendications précédentes, caractérisé par le fait que les nervures de guidage (7) sont limitées à une zone médiane axiale du corps annulaire (1).
